# FASCICULE DE BREVET EUROPEEN

(11) **EP 0 733 000 B1**
(45) Date de publication et mention de la délivrance du brevet: **10.03.1999**
(21) Numéro de dépôt: 95903270.7
(22) Date de dépôt: 22.11.1994
(51) Int. Cl.: B60B 21/10

(54) **PNEUMATIQUE, JANTE, ANNEAU DE SOUTIEN ET ENSEMBLE COMPRENANT LESDITS ELEMENTS**
REIFEN, FELGE, STÜTZRING UND EINRICHTUNG MIT DIESEN TEILEN
TYRE, RIM, SUPPORTING RING AND ASSEMBLY COMPRISING SAME

(30) Priorité: 08.12.1993 FR 9314702
(43) Date de publication de la demande: 25.09.1996
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: MUHLHOFF, Olivier, F-63100 Clermont-Ferrand (FR); POMPIER, Jean-Pierre, F-63530 Volvic (FR)
(74) Mandataire: Devaux, Edmond-Yves
(86) Numéro de dépôt international: EP9403873
(87) Numéro de publication internationale: WO9515863

(56) Documents cités:
- EP-A- 0 138 027
- EP-A- 0 377 338
- DE-C- 858 514
- GB-A- 2 062 503
- US-A- 4 606 390

## Description

La présente invention a pour objet la réalisation de jantes de montage, de préférence monobloc, pour des pneumatiques de préférence à carcasse radiale, et formant, avec lesdits pneumatiques et éventuellement des anneaux de soutien de bande de roulement, des ensembles dont certains peuvent s'avérer utiles dans le cas de roulage où la pression de gonflage s'abaisse anormalement par rapport à la pression nominale d'emploi, dite pression de service, la pression de gonflage pouvant même devenir nulle.

Les principales difficultés rencontrées dans le cas d'un roulage à plat ou à pression faible concernent les risques de décoincement des bourrelets du pneumatique et en particulier le décoincement du bourrelet situé du côté extérieur du pneumatique monté du côté extérieur du véhicule. Les techniques proposées et bien connues pour éviter de tels décoincements, et en particulier celle consistant à disposer axialement à l'intérieur du siège extérieur de jante une saillie ou hump de faible hauteur, tendent à augmenter les difficultés de montage et de démontage des pneumatiques.

Une solution, susceptible d'être appliquée au problème de décoincement de bourrelets, est celle décrite dans le brevet français 1139619, qui concerne un ensemble formé d'un pneumatique et d'une jante tels que les bords souples du pneumatique, contrairement aux bourrelets usuels, viennent, sous l'effet de la pression de gonflage, enserrer des butées de jante destinées à maintenir lesdits bords écartés l'un de l'autre. Cette solution demande une armature de carcasse pour le moins spéciale et non conforme au compromis de propriétés requises pour un pneumatique actuel.

Certaines solutions antérieures préconisent l'addition à une jante, telle que décrite précédemment, d'un appui de soutien, intégré ou rapporté et fixé par tout moyen disponible. Que ce soit avec hump ou sans hump, les ensembles comportant des jantes avec appui de soutien sont connus, et les demandes allemande 3 626 012 et française 2 560 121 montrent de tels ensembles. Leur emploi ne s'est cependant pas généralisé car, malgré les progrès réalisés, se posent aussi de difficiles problèmes de montage. La demande française, citée ci-dessus, décrit un procédé de montage permettant la suppression de nombreuses difficultés : le basculement et l'ovalisation d'un des bourrelets du pneumatique permettent le passage de la jante, munie de son appui de soutien à l'intérieur du pneumatique, si ladite jante est présentée avec son axe de rotation perpendiculaire à l'axe de rotation de l'enveloppe pneumatique, les bourrelets étant ensuite, à l'aide des gorges de montage situées axialement de part et d'autre de l'appui de soutien, placés sur leurs sièges de jante respectifs.

La méthode décrite ci-dessus n'est pas applicable dans tous les cas, la longueur circonférentielle des tringles de pneumatique devant être relativement grande, d'où l'impossibilité d'avoir à sa disposition des pneumatiques de rapport de forme usuelle avec un appui intérieur suffisamment haut, donc efficace.

Le document EP 0.138.027 de la demanderesse décrit une jante monobloc destinée au montage d'un pneumatique comprenant deux bourrelets, et comprenant deux sièges de jante, l'un desdits sièges étant, comme connu, incliné vers l'intérieur et prolongé à l'intérieur par une saillie de faible hauteur et à l'extérieur par un rebord de jante. L'autre siège de jante, afin de faciliter le montage du pneumatique sur sa jante tout en améliorant la performance antidécoincement du bourrelet de pneumatique correspondant, est prolongé axialement à l'intérieur par une saillie de hauteur plus importante et pourvue d'une encoche conformée et orientée de manière à permettre le montage du pneumatique.

La présente demande concerne des solutions différentes de celles exposées dans la demande précitée, permettant de la même manière d'améliorer les conditions de fonctionnement et d'utilisation d'un pneumatique à carcasse radiale en cas de roulage à pression nulle ou à pression faible tout en permettant une meilleure protection contre les chocs dus aux trottoirs, lesdites solutions concernant aussi bien les jantes que les ensembles formés par lesdites jantes et les pneumatiques adaptés à de telles jantes , avec ou sans anneau de soutien de bande de roulement, amovible ou non.

A cet effet et conformément à l'invention, une jante monobloc destinée au montage d'un pneumatique comprenant deux bourrelets renforcés, délimitée axialement par deux bords de jante, distants axialement de la largeur S de jante, et comprenant, vue en section méridienne, axialement à l'extérieur, un premier siège et un second siège de jante, ledit deuxième siège de jante ayant une génératrice dont l'extrémité axialement extérieure est sur un cercle de diamètre au moins égale au diamètre du cercle sur lequel se trouve l'extrémité axialement intérieure, et étant prolongé axialement à l'intérieur par une saillie ou hump de faible hauteur, et axialement à l'extérieur par un rebord de jante, le diamètre du dit rebord étant supérieur au diamètre de toute partie de la jante comprise entre ledit rebord et le bord de jante axialement le plus proche dudit rebord, caractérisée en ce que le premier siège de jante a une génératrice dont l'extrémité axialement extérieure est sur un cercle de diamètre inférieur au diamètre du cercle sur lequel se trouve l'extrémité axialement intérieure, ledit premier siège de jante étant prolongé axialement à l'extérieur par une saillie de faible hauteur.

Au vu des propriétés recherchées pour l'ensemble, formé par la jante conforme à l'invention et un pneumatique d'architecture adaptée à ladite jante, il est avantageux que l'ensemble comprenne un anneau de soutien de bande de roulement. Ainsi selon une variante préférentielle conforme à l'invention, la jante est caractérisée en ce qu'elle comprend au moins une portée, destinée à recevoir un anneau de soutien pour bande de roulement, disposée axialement entre les extrémités axialement intérieures des deux sièges de jante, et ayant une génératrice dont le diamètre minimum, qui est le diamètre de l'une des extrémités de ladite génératrice, est au moins égal au diamètre de toute partie de jante comprise axialement entre ladite extrémité et le bord de jante correspondant au siège de jante le plus proche axialement de ladite extrémité. La portée peut être une portion de révolution. Il faut entendre par diamètre de la portée, le diamètre des parties de ladite portée qui seront en contact avec l'appui de soutien.

La jante peut aussi comporter au moins une gorge de montage qui prolongera axialement à l'intérieur au moins le deuxième siège de jante, munie de son rebord axialement extérieur et de la saillie axialement intérieure, alors que la portée éventuelle sera avantageusement axialement adjacente au premier siège de jante.

Une gorge de montage servant, éventuellement, au montage des bourrelets sur leurs sièges respectifs de jante, possède une profondeur et une largeur axiale qui est fonction en premier lieu de la largeur axiale des bourrelets et du diamètre intérieur des anneaux de renforcement, des tringles par exemple, et le cas échéant de la largeur de la portée de jante destinée à recevoir l'appui de soutien.

Les sièges de jante ont avantageusement, dans tous les cas évoqués précédemment, des génératrices tronconiques faisant avec l'axe de rotation un angle α', compris entre 4° et 30°, angles pouvant être égaux ou inégaux pour lesdits sièges.

La portée de jante sur laquelle sera enfilé l'anneau de soutien, peut avantageusement se présenter comme une portée cylindrique; son diamètre minimum D peut avantageusement être égal au diamètre nominal de la jante. De même, il est intéressant de prévoir sur son bord axialement intérieur une saillie de positionnement, servant à l'intérieur de butée à l'anneau de soutien. La gorge de montage peut alors être ménagée entre cette saillie et le siège opposé à celui autour duquel peut être enfilé l'anneau de soutien.

La largeur axiale L comprise entre cette saillie de positionnement et la saillie axialement extérieure, correspondant au siège adjacent à la portion de révolution, est avantageusement au plus égale à la moitié de la largeur maximale S de la jante, comprise entre les deux bords de jante.

La hauteur de la saillie axialement extérieure du premier siège de jante est avantageusement au plus égale à 2,25% du diamètre nominal de la jante de montage.

Quant à la saillie adjacente axialement à l'extérieur au premier siège de jante, sa paroi intérieure sera préférentiellement tronconique, ladite paroi ayant une génératrice faisant avec l'axe de rotation de la jante un angle ouvert radialement et axialement vers l'extérieur, compris entre 40° et 50°.

Un ensemble, formé par une jante et un anneau de soutien, est conforme à l'invention, quand la jante de l'ensemble est une jante possédant une portée et telle que décrite ci-dessus, et que l'anneau de soutien de bande de roulement est ovalisable, de préférence inextensible circonférentiellement et enfilable sur la portée de jante.

L'efficacité maximale de l'ensemble conforme à l'invention est obtenue pour des hauteurs d'appui de soutien élevées, préférentiellement supérieures à 40 % de la hauteur de l'armature de carcasse. Cette particularité offre l'avantage de prolonger le roulage à plat, c'est-à-dire à pression de gonflage nulle, sans provoquer, dans le cas d'une structure usuelle des flancs du pneumatique, des déchéances au niveau de ceux-ci, de l'armature de carcasse et même de l'armature de sommet.

L'appui de soutien annulaire est aisément enfilable du fait des caractéristiques particulières de la jante de montage et si l'on choisit son diamètre intérieur minimum, au moins égal au diamètre minimum D de la portée de jante, et au plus supérieur de 2 mm audit diamètre, sa génératrice intérieure étant parallèle à la génératrice de la portée de jante.

L'appui de soutien, ovalisable et inextensible circonférentiellement, est préférentiellement constitué de vulcanisat caoutchouteux sous forme annulaire, ledit vulcanisat étant renforcé par des armatures de fils ou câbles disposés circonférentiellement, à 2° près. Une telle constitution permet une manipulation aisée, tout en assurant l'inextensibilité dans toutes les conditions de roulage et en particulier sous l'effet des forces centrifuges dues à la grande vitesse.

Conformément à l'invention, un ensemble constitué par une jante et un pneumatique est caractérisé en ce qu'il comporte une jante telle que décrite précédemment et un pneumatique possédant une structure de bourrelets adaptée à ladite jante.

Un pneumatique, destiné à l'ensemble ci-dessus et possédant au moins deux bourrelets, est caractérisé en ce que le siège du premier bourrelet a une génératrice dont l'extrémité axialement extérieure est sur un cercle de diamètre inférieur au diamètre du cercle sur lequel se trouve l'extrémité axialement intérieure, alors que le siège du deuxième bourrelet a une génératrice dont l'extrémité axialement extérieure est sur un cercle de diamètre supérieur au diamètre du cercle sur lequel se trouve l'extrémité axialement intérieure.

Le pneumatique comprend avantageusement une armature de carcasse radiale ancrée dans chaque bourrelet à un anneau de renforcement. Ladite armature de carcasse a, lorsque le pneumatique est monté sur jante et gonflé à sa pression de service, et au moins dans le bourrelet destiné à être monté sur le premier siège de jante, un profil méridien à sens de courbure constant.

De manière préférentielle, le pneumatique destiné à l'ensemble selon l'invention a une armature de carcasse radiale dont le profil, au moins dans le bourrelet appelé à être monté sur le premier siège de jante, a une tangente AT, au point de tangence A avec l'anneau de renforcement du bourrelet, qui fait avec l'axe de rotation un angle φ ouvert vers l'extérieur d'au moins 70°, et de préférence supérieur à 80°.

S'il est préférable que l'armature de carcasse radiale du pneumatique ait un profit méridien à sens de courbure constant sur toute sa longueur, c'est à dire entre les deux points de tangence dudit profit aux anneaux de renforcement, et dont les tangentes auxdits points de tangence avec les anneaux de renforcement, font avec l'axe de rotation des angles ouverts vers l'extérieur, compris préférentiellement entre 70° et 110°, l'armature de carcasse peut avantageusement avoir, dans le bourrelet destiné à être monté sur le deuxième siège de jante, un profit méridien présentant un point d'inflexion entre une partie dudit profit à courbure convexe et une partie à courbure concave, et ladite portion de profit à courbure convexe ayant une tangente au point d'inflexion ci-dessus faisant avec l'axe de rotation un angle, ouvert axialement et radialement vers l'extérieur, compris entre 60° et 90°.

Dans un pneumatique avantageux pour la mise en oeuvre de l'invention, les sièges de bourrelets sont tronconiques et chaque siège fait avec l'axe de rotation un angle compris entre 10° et 45°, angle ouvert axialement vers l'intérieur et radialement vers l'extérieur pour le siège de bourrelet destiné à être monté sur le premier siège de jante, et angle ouvert axialement et radialement vers l'extérieur pour le siège de bourrelet destiné à être monté sur le deuxième siège de jante.

La pointe du bourrelet, destiné à être monté sur le premier siège de jante, peut être tronquée, ou autrement dit, le siège ou base du bourrelet sera réuni au bourrelet du côté pointe par un segment de droite incliné par rapport à une parallèle à l'axe de rotation d'un angle ouvert radialement et axialement vers l'extérieur, inférieur à 90°, et de préférence égal à 45° ± 5°, la pointe de bourrelet étant la partie du bourrelet correspondant à l'extrémité du siège de bourrelet la plus proche de l'axe de rotation, alors que le talon du bourrelet est la partie du bourrelet correspondant à l'extrémité de siège de bourrelet la plus éloignée. Les talons de bourrelets du pneumatique de l'invention sont aussi avantageusement tronqués, les sièges de bourrelets étant alors prolongés axialement du côté talons par des génératrices faisant avec l'axe de rotation des angles compris entre 40° et 50°.

Lesdits bourrelets sont montés sur la jante et en particulier sur les sièges tronconiques de jante avec un certain serrage. Ce serrage est défini, dans le cas de l'ensemble considéré, comme étant le rapport entre le diamètre minimum du siège de jante et le diamètre minimum du siège de bourrelet. Ce serrage sera préférentiellement au moins égal à 1,003 tout en restant inférieur à 1,02.

Outre que l'ensemble, conforme à l'invention, résout le problème de décoincement des bourrelets tout en minimisant les problèmes de montage des pneumatiques dans tous les cas qui se présentent usuellement, la structure particulière du pneumatique et plus particulièrement des bourrelets du pneumatique offre d'autres avantages.

En effet, si l'ovalisation des bourrelets d'un pneumatique est une opération nécessaire pour le montage dudit pneumatique et bien que la constitution de certains anneaux de renforcement de bourrelets, en particulier les tringles de type "tressé", permettent une ovalisation facile, cette manipulation ne doit pas dépasser certaines limites. En particulier, une ovalisation trop poussée, ce qui est le cas dans l'art antérieur décrit, affecte fortement la rigidité d'une tringle, que ce soit sous effort de traction, de flexion sur chant, de flexion dans son plan, ce qui se traduit dans certains cas du pneumatique en roulage par des propriétés d'antidécoincement, d'étanchéité, d'endurance à la fatigue des bourrelets et de résistance à l'éclatement dégradées. Ces propriétés sont conservées par l'invention.

L'invention sera mieux comprise à l'aide du dessin annexé à la description, illustrant des exemples non limitatifs d'exécution d'un pneumatique 185/33-16, monté sur une jante de diamètre égal à 406,4 mm, dessin sur lequel
- la figure 1 montre une coupe méridienne d'une jante, conforme à l'invention,
- la figure 2 montre une coupe méridienne d'un ensemble, comprenant une jante, un pneumatique d'architecture adaptée et un anneau de soutien de bande de roulement.

La jante (2), de largeur axiale S mesurée entre ses extrémités axialement les plus éloignées du plan équatorial XX', est formée, en allant d'un bord à l'autre, d'une saillie ou hump (25') dont la face ou paroi intérieure fait avec l'axe de rotation de la jante un angle γ', égal à l'angle γ de la face externe (12A) de la pointe du bourrelet (12') du pneumatique (1), et dont le diamètre D_{S}, égal à 402 mm, est inférieur au diamètre intérieur D_{T} de l'anneau de renforcement (14), qui est, dans l'exemple décrit une tringle de type "tressé". La hauteur h₁, mesurée par rapport à l'extrémité axialement extérieure du siège de jante (23') est au plus égale à 2,25% du diamètre nominal D, ledit diamètre nominal D étant, comme généralement admis et dans le cas décrit montrant une jante où les deux sièges ont même diamètre, le diamètre des extrémités des sièges de jante radialement les plus éloignées de l'axe de rotation. Ce diamètre nominal est égal à 406,4 mm.

La saillie (25') est prolongée axialement à l'intérieur par le siège de jante (23'), qui est lui même adjacent axialement à l'intérieur à une portion de révolution (21). Ladite portion de révolution a une génératrice cylindrique de diamètre D et cette portion cylindrique est munie axialement à l'intérieur d'une butée de positionnement (26), cette butée servant, comme son nom l'indique, à positionner l'anneau de soutien de bande de roulement qui sera enfilé sur la portion de révolution. La hauteur h₂ de cette butée, au plus égale à 1,5% du diamètre nominal D de la jante (2), est, dans l'exemple décrit, égale à 5 mm. La distance axiale L, mesurée entre l'extrémité de la saillie (25') et la face intérieure de la butée (26), est égale à 103 mm, quantité qui est inférieure à la moitié de la largeur de la jante (2), égale à 215 mm.

Prolongeant axialement la portion de révolution, munie de sa butée de positionnement, la gorge de montage (22) a une profondeur h' de 50 mm, cette hauteur h' étant mesurée radialement à partir de la ligne axiale définissant le diamètre nominal D de la jante. Le siège (23''), d'une part munie axialement à l'intérieur d'une saillie ou hump (25'') de hauteur égale dans le cas décrit à 3 mm et d'autre part adjacent axialement à l'extérieur à un rebord de jante (24), complète la jante (2). Le siège (23'') possède une génératrice dont l'extrémité axialement intérieure est sur un cercle de diamètre inférieur au diamètre du cercle sur lequel se trouve l'extrémité axialement extérieure dudit siège (23''), ladite extrémité axialement extérieure se trouvant sur un cercle de diamètre D, qui est aussi le diamètre nominal et le diamètre de l'extrémité axialement intérieure du siège (23'). Quant au rebord de jante (24), il a la forme connue des rebords de jante usuels et normalisés par les instances internationales, c'est à dire qu'il est composé d'une première partie (24'), perpendiculaire à l'axe de rotation de la jante, ladite première partie étant prolongée axialement et radialement à l'extérieur par une deuxième partie courbe (24''). Le rebord (24) a un diamètre D_{F} de 432 mm, et supérieur au diamètre D de la portion de révolution.

Les deux sièges de jante (23') et (23'') ont des génératrices tronconiques, faisant avec l'axe de rotation de la jante un angle α', compris entre 4° et 30°, et dans l'exemple décrit égal à 14°.

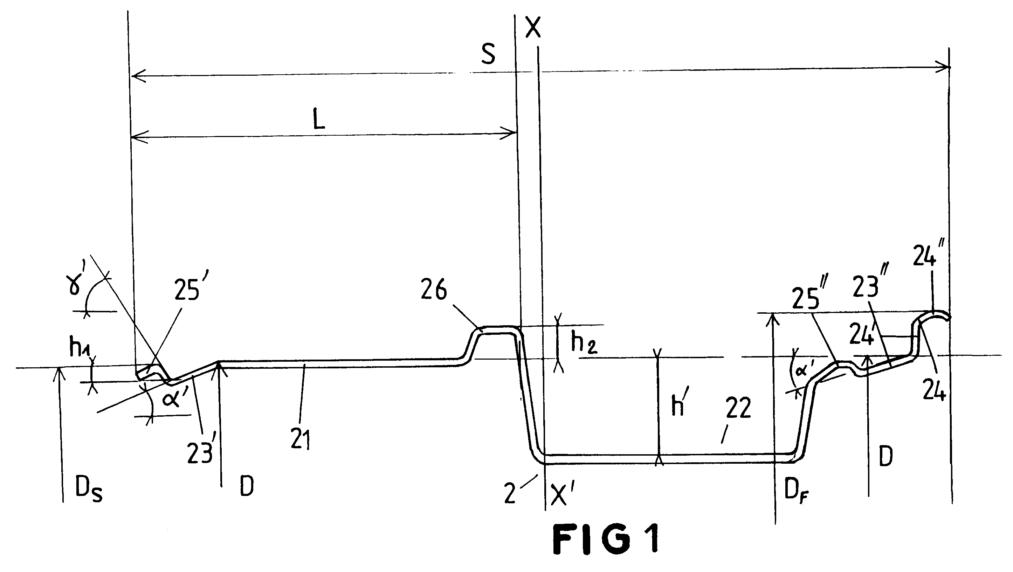

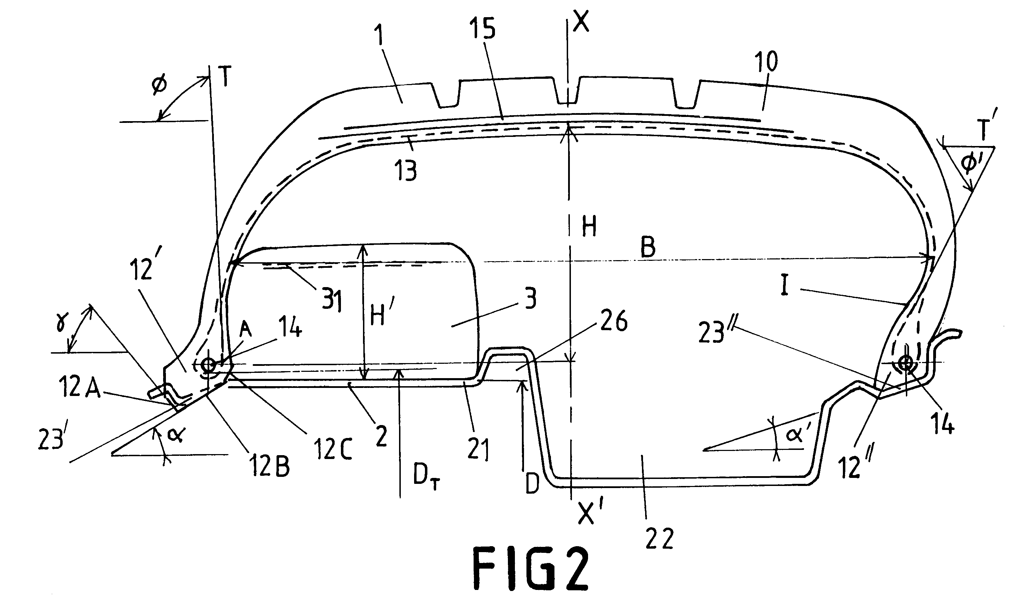

Sur la figure 2, l'ensemble E comprend la jante (2) telle que montrée sur la figure 1, un pneumatique (1) possédant une architecture de bourrelet adaptée, et un anneau de soutien (3) de bande de roulement. Le pneumatique (1) comprend une bande de roulement (1O) réunie, au moyen de deux flancs, à deux bourrelets (12') et (12''). Il est renforcé par une armature de carcasse radiale (13) formée d'une seule nappe de câbles textiles, ancrée dans chaque bourrelet (12',12'') par retournement autour d'une tringle (14) qui est, dans l'exemple montré une tringle de type "tressé". L'armature de carcasse est surmontée d'une armature de sommet (15). Le pneumatique (1) a un rapport de forme préférentiellement au plus égal à 0,7, et plus précisément inférieur à 0,5. Il faut entendre par rapport de forme le rapport H/B de l'armature de carcasse, H étant la hauteur de l'armature de carcasse (13) et B sa largeur axiale maximale. La hauteur H est la distance radiale séparant le point T de l'armature de carcasse le plus éloigné de l'axe de rotation de la ligne axiale passant par le centre de gravité O de la section de tringle (14) la plus proche de l'axe de rotation; elle est, dans le cas décrit, égale à 63 mm, le pneumatique considéré ayant un rapport de forme égal à 0,33. La largeur axiale maximale B est égale à 190 mm.

L'armature de carcasse (13) a, du côté de l'ensemble correspondant au premier siège de jante (23') et dans le bourrelet (12'), un profil méridien dont la tangente AT au point A à la tringle (14) fait avec l'axe de rotation du pneumatique un angle φ ouvert vers l'extérieur de 85°. Ladite armature de carcasse a, du côté de l'ensemble correspondant au deuxième siège de jante (23'') et dans le bourrelet (12''), un profil méridien présentant un point d'inflexion 1. Radialement au-dessus dudit point d'inflexion, le profil d'armature est convexe; radialement au-dessous dudit point d'inflexion, le profil d'armature est concave et vient tangenter la tringle (14) au point A, alors qu'au point I, la tangente IT' au profil méridien fait avec l'axe de rotation du pneumatique un angle φ¹ égal à 75°.

Chaque bourrelet (12', 12''), de largeur axiale comparable aux largeurs connues et usuelles de bourrelets, présente un siège de bourrelet à base tronconique (12B) faisant avec l'axe de rotation un angle α, compris entre 10° et 45°, et dans le cas décrit égal à 22° et supérieur à l'angle α', qui est l'angle des sièges de jante. Du côté de l'ensemble correspondant au premier siège de jante (23'), le siège de bourrelet (12B) est prolongé axialement à l'extérieur par la face externe (12A) de la pointe de bourrelet (12'), et axialement à l'intérieur par une génératrice tronconique (12C) correspondant au talon du bourrelet (12'). Du côté de l'ensemble correspondant au deuxième siège de jante (23''), le siège de bourrelet (12B) est prolongé axialement à l'extérieur par une génératrice tronconique (12C) de talon, alors que ledit siège (12B) est, axialement à l'intérieur, réuni à la paroi intérieure du pneumatique de manière usuelle.

Quant à l'anneau de soutien (3) de bande de roulement, sa section méridienne a une forme voisine d'un rectangle dont le côté radialement intérieur est rectiligne, alors que les côtés latéraux et le côté radialement extérieur peuvent être légèrement courbes. La différence H' entre son rayon intérieur et son rayon extérieur est égale à 31 mm, ce qui représente 50 % de la hauteur H du pneumatique (1).

Il est constitué d'un vulcanisat de caoutchouc (30), renforcé respectivement radialement à l'intérieur et radialement à l'extérieur par une armature (31) constituée de deux couches de câbles textiles orientés circonférentiellement à plus ou moins 2°. Le diamètre de cet anneau de soutien étant, dans le cas décrit, égal au diamètre D de la portion de révolution (21), il est aisément enfilable sur ladite portion de révolution.

## Revendications

1. Jante (2) monobloc destinée au montage d'un pneumatique (1) comprenant deux bourrelets (12 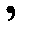 , 12 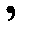 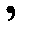 ) renforcés, délimitée axialement par deux bords de jante, distants axialement de la largeur S de jante, et comprenant, vue en section méridienne, axialement à l'extérieur, un premier siège (23 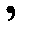 ) et un second siège de jante (23 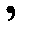 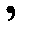 ), ledit deuxième siège de jante (23 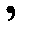 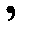 ) ayant une génératrice dont l'extrémité axialement extérieure est sur un cercle de diamètre au moins égale au diamètre du cercle sur lequel se trouve l'extrémité axialement intérieure, et étant prolongé axialement à l'intérieur par une saillie ou hump (25 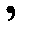 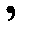 ) de faible hauteur, et axialement à l'extérieur par un rebord de jante (24), le diamètre du dit rebord étant supérieur au diamètre de toute partie de la jante comprise entre ledit rebord et le bord de jante axialement le plus proche dudit rebord, caractérisée en ce que le premier siège de jante (23 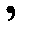 ) a une génératrice dont l'extrémité axialement extérieure est sur un cercle de diamètre inférieur au diamètre du cercle sur lequel se trouve l'extrémité axialement intérieure, ledit premier siège de jante (23 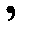 ) étant prolongé axialement à l'extérieur par une saillie (25 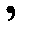 ) de faible hauteur h₁.

2. Jante (2) monobloc selon la revendication 1, caractérisée en ce qu'elle comprend au moins une portée (21), destinée à recevoir un anneau de soutien (3) pour bande de roulement, disposée axialement entre les extrémités axialement intérieures des deux sièges de jante (23') et (23''), et ayant une génératrice dont le diamètre minimum, qui est le diamètre de l'une des extrémités de ladite génératrice, est au moins égal au diamètre de toute partie de jante comprise axialement entre ladite extrémité et le bord de jante correspondant au siège de jante le plus proche axialement de ladite extrémité.

3. Jante (2) monobloc selon l'une des revendications 1 ou 2, caractérisée en ce qu'elle comporte au moins une gorge de montage (22), gorge qui prolongera axialement à l'intérieur au moins le siège (23 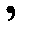 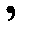 ) adjacent axialement au rebord de jante (24).

4. Jante (2) monobloc selon l'une des revendications 2 ou 3, caractérisée en ce que la portée (21) est axialement adjacente au premier siège de jante (23 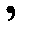 ).

5. Jante selon l'une des revendications 1 à 4, caractérisée en ce que les sièges de jante (23', 23'') ont des génératrices tronconiques faisant avec l'axe de rotation un angle α', compris entre 4° et 30°.

6. Jante selon la revendication 5, caractérisée en ce que les sièges de jante (23', 23'') ont des génératrices tronconiques faisant avec l'axe de rotation des angles α' inégaux entre eux.

7. Jante selon des revendications 2 à 6, caractérisée en ce que la portée de jante (21) sur laquelle sera enfilé l'anneau de soutien (3), a une génératrice cylindrique dont le diamètre minimum D est égal au diamètre nominal de la jante, ladite portée étant éventuellement munie sur son bord axialement intérieur d'une saillie de positionnement (26), servant à l'intérieur de butée à l'anneau de soutien (3).

8. Ensemble formé par une jante (2) et un anneau de soutien (3), caractérisé en ce que la jante (2) de l'ensemble est une jante selon l'une des revendications 2 à 7, et en ce que l'anneau de soutien (3) de bande de roulement est ovalisable, de préférence inextensible circonférentiellement et enfilable sur la portée de jante.

9. Ensemble constitué par une jante (2) et un pneumatique (1) et éventuellement un anneau de soutien (3), caractérisé en ce qu'il comporte une jante (2) selon l'une des revendications 1 à 8 et un pneumatique possédant deux bourrelets (12 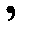 , 12 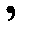 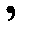 ), le siège du premier bourrelet (12 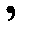 ) ayant une génératrice (12B) dont l'extrémité axialement extérieure est sur un cercle de diamètre inférieur au diamètre du cercle sur lequel se trouve l'extrémité axialement intérieure, alors que le siège du deuxième bourrelet (12 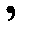 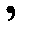 ) a une génératrice (12B) dont l'extrémité axialement extérieure est sur un cercle de diamètre au moins égal au diamètre du cercle sur lequel se trouve l'extrémité axialement intérieure, et une armature de carcasse radiale (13) ancrée dans chaque bourrelet (12 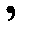 , 12 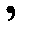 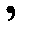 ) à un anneau de renforcement (14), ladite armature (13) ayant lorsque le pneumatique est monté sur jante et gonflé à sa pression de service, et au moins dans le premier bourrelet (12 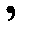 ) un profil méridien à sens de courbure constant dont la tangente AT, au point de tangence A avec l'anneau de renforcement (14) du bourrelet (12 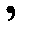 ) fait avec l'axe de rotation un angle φ ouvert vers l'extérieur d'au moins 70°, et de préférence supérieur à 80°.

10. Pneumatique (1) destiné à être monté sur une jante selon l'une des revendications 1 à 9, caractérisé en ce qu'il possède deux bourrelets (12 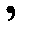 , 12 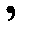 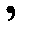 ) le siège du premier bourrelet (12 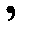 ) ayant une génératrice (12B) dont l'extrémité axialement extérieure est sur un cercle de diamètre inférieur au diamètre du cercle sur lequel se trouve l'extrémité axialement intérieure, alors que le siège du deuxième bourrelet (12 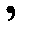 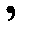 ) a une génératrice (12B) dont l'extrémité axialement extérieure est sur un cercle de diamètre au moins égal au diamètre du cercle sur lequel se trouve l'extrémité axialement intérieure, et une armature de carcasse radiale (13) ancrée dans chaque bourrelet (12 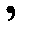 , 12 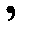 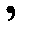 ) à un anneau de renforcement (14), ladite armature (13) ayant lorsque le pneumatique est monté sur jante et gonflé à sa pression de service, et au moins dans le premier bourrelet (12 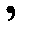 ) un profil méridien à sens de courbure constant dont la tangente AT, au point de tangence A avec l'anneau de renforcement (14) du bourrelet (12 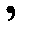 ) fait avec l'axe de rotation un angle φ ouvert vers l'extérieur d'au moins 70°, et de préférence supérieur à 80°.

11. Pneumatique (1), selon la revendication 10, caractérisé en ce que ladite armature a, lorsque le pneumatique est monté sur jante et gonflé à sa pression de service, un profil méridien, dont le sens de courbure est constant sur toute sa longueur, et en ce que les tangentes AT aux points de tangence A dudit profil avec les anneaux de renforcement (14) des bourrelets (12', 12'') font avec l'axe de rotation des angles φ compris entre 70° et 110°.

12. Pneumatique (1) selon la revendication 10, caractérisé en ce que ladite armature (13) a, lorsque le pneumatique est monté sur jante et gonflé à sa pression de service, un profil méridien,
- qui, dans le premier bourrelet (12') a un sens de courbure constant, et dont la tangente AT, au point de tangence A avec l'anneau de renforcement (14) du premier bourrelet (12') fait avec l'axe de rotation un angle φ ouvert vers l'extérieur d'au moins 70°, et de préférence supérieur à 80°,
- et qui, dans le deuxième bourrelet (12'') présente un point d'inflexion I, point de passage d'une courbure convexe dudit profil à une courbure concave du même profil, ladite portion de profil à courbure convexe ayant une tangente IT', au point d'inflexion I faisant avec l'axe de rotation un angle φ 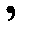 , ouvert axialement et radialement vers l'extérieur, compris entre 60° et 90°.

## Claims

1. An integral rim (2) intended for mounting a tyre (1) comprising two reinforced beads (12', 12''), axially delimited by two rim edges which are axially distant by the rim width S, and comprising, viewed in meridian section, axially outwardly a first rim seat (23') and a second rim seat (23''), said second rim seat (23'') having a generatrix, the axially outer end of which is on a circle of diameter at least equal to the diameter of the circle on which the axially inner end is situated, and being extended axially inwardly by a shoulder or hump (25'') of low height and axially outwardly by a rim flange (24), the diameter of said flange being greater than the diameter of any part of the rim included between said flange and the rim edge which is axially nearest to said flange, characterised in that the first rim seat (23') has a generatrix, the axially outer end of which is on a circle of diameter less than the diameter of the circle on which the axially inner end is situated, said first rim seat (23') being axially outwardly extended by a shoulder (25') of low height h₁.

2. An integral rim (2) according to claim 1, characterised in that it comprises at least one supporting surface (21) intended to receive a tread support ring (3), disposed axially between the axially inner ends of the two rim seats (23') and (23'') and having a generatrix, the minimum diameter of which, which is the diameter of one of the ends of said generatrix, is at least equal to the diameter of any part of the rim axially included between said end and the rim edge corresponding to the rim seat which is axially nearest to said end.

3. An integral rim (2) according to one of claims 1 or 2, characterized in that it comprises at least one mounting groove (22), which groove axially inwardly extends at least the seat (23'') which is axially adjacent to the rim flange (24).

4. An integral rim (2) according to one of claims 2 or 3, characterized in that the supporting surface (21) is axially adjacent to the first rim seat (23').

5. A rim according to any one of claims 1 to 4, characterized in that the rim seats (23', 23'') have frustoconical generatrices forming an angle α' between 4° and 30° with the axis of rotation.

6. A rim according to claim 5, characterized in that the rim seats (23', 23'') have frustoconical generatrices forming angles α' with the axis of rotation which are different from each other.

7. A rim according to claims 2 to 6, characterized in that the rim supporting surface (21) on to which the support ring (3) will be slipped has a cylindrical generatrix, the minimum diameter D of which is equal to the nominal diameter of the rim, said supporting surface possibly being provided on its axially inner edge with a positioning shoulder (26) serving as an inner stop for the support ring (3).

8. An assembly formed by a rim (2) and a support ring (3), characterized in that the rim (2) of the assembly is a rim according to claims 2 to 7, and that the tread support ring (3) can be ovalised, and is preferably circumferentially inextensible and can be slipped on to the rim supporting surface.

9. An assembly formed by a rim (2) and a tyre (1) and possibly by a support ring (3), characterized in that it comprises a rim (2) according to any one of claims 1 to 8 and a tyre having two beads (12', 12''), the seat of the first bead (12') having a generatrix (12B), the axially outer end of which is on a circle of diameter less than the diameter of the circle on which the axially inner end is situated, whilst the seat of the second bead (12'') has a generatrix (12B), the axially outer end of which is on a circle of diameter at least equal to the diameter of the circle on which the axially inner end is situated, and a radial carcass reinforcement (13) anchored within each bead (12', 12'') to a reinforcement ring (14), said reinforcement (13), when the tyre is mounted on the rim and inflated to its operating pressure, having, at least within the first bead (12'), a meridian profile with a constant direction of curvature, the tangent AT of which at the point of tangency A with the reinforcement ring (14) of the bead (12') forms an outwardly open angle φ of at least 70°, preferably greater than 80°, with the axis of rotation.

10. A tyre (1) intended to be mounted on a rim according to one of claims 1 to 9, characterized in that it has two beads (12', 12''), the seat of the first bead (12') having a generatrix (12B), the axially outer end of which is on a circle of diameter less than the diameter of the circle on which the axially inner end is situated, whilst the seat of the second bead (12'') has a generatrix (12B), the axially outer end of which is on a circle of diameter at least equal to the diameter of the circle on which the axially inner end is situated, and a radial carcass reinforcement (13) anchored within each bead (12', 12'') to a reinforcement ring (14), said reinforcement (13), when the tyre is mounted on the rim and inflated to its operating pressure, and at least in the first bead (12'), having a meridian profile which has a constant direction of curvature, the tangent AT of which at the point of tangency A with the reinforcement ring (14) of the bead (12') forms an outwardly open angle φ of at least 70°, preferably greater than 80°, with the axis of rotation.

11. A tyre (1) according to claim 10, characterized in that when the tyre is mounted on the rim and inflated to its operating pressure said reinforcement has a meridian profile, the direction of curvature of which is constant over its entire length, and that the tangents AT at the points of tangency A of said profile with the reinforcement rings (14) of the beads (12', 12'') form angles φ between 70° and 110° with the axis of rotation.

12. A tyre (1) according to claim 10, characterized in that when the tyre is mounted on the rim and inflated to its operating pressure said reinforcement (13) has a meridian profile
- which has a constant direction of curvature within the first bead (12') and the tangent AT of which at the point of tangency A with the reinforcement ring (14) of the first bead (12') forms an outwardly open angle φ of at least 70°, preferably greater than 80°, with the axis of rotation,
- and which has a point of inflection I in the second bead (12'') which is a transition point from a convex curvature of the same profile to a concave curvature of said profile, said portion of the profile with concave curvature having a tangent IT' at the point of inflection I forming an axially and radially outwardly open angle φ' between 60° and 90° with the axis of rotation.

## Patentansprüche

1. Einstückige Felge (2), die zur Montage eines Reifens (1) mit zwei verstärkten Wülsten (12', 12'') bestimmt ist, die axial durch zwei Felgenränder begrenzt ist, die axial mit der Felgenbreite S beabstandet sind, und die, im Meridianschnitt gesehen, axial auf der Außenseite einen ersten Felgensitz (23') und einen zweiten Felgensitz (23'') aufweist, wobei der genannte zweite Felgensitz (23'') eine Erzeugende hat, deren axial außenliegendes Ende sich auf einem Kreis mit einem Durchmesser befindet, der mindestens gleich ist dem Durchmesser des Kreises, auf dem sich das axial innenliegende Ende befindet, und die axial auf der Innenseite durch einen Vorsprung oder Höcker (25'') mit geringer Höhe verlängert ist, sowie axial auf der Außenseite durch einen Felgenring (24), wobei der Durchmesser des genannten Ringes größer ist als der Durchmesser eines jeden Abschnitts der Felge, der zwischen dem genannten Ring und dem axial zum genannten Ring nächstgelegenen Felgenrand liegt,
**dadurch gekennzeichnet, daß**
der erste Felgensitz (23') eine Erzeugende hat, deren axial außenliegendes Ende auf einem Kreis mit einem Durchmesser liegt, der kleiner ist als der Durchmesser des Kreises, auf dem sich das axial innenliegende Ende befindet, wobei der genannte erste Felgensitz (23') axial nach außen um einen Vorsprung (25') mit geringer Höhe h₁ verlängert ist.

2. Einstückige Felge (2) nach Anspruch 1, dadurch gekennzeichnet, daß sie mindestens einen Bereich (21) aufweist, der dazu bestimmt ist, einen Stützring (3) für die Lauffläche aufzunehmen, der axial zwischen den axial innenliegenden Enden der beiden Felgensitze (23') und (23'') angeordnet ist, und eine Erzeugende hat, deren Mindestdurchmesser, der der Durchmesser eines der Enden der genannten Erzeugenden ist, mindestens gleich ist dem Durchmesser eines jeden Felgenabschnitts, der axial zwischen dem genannten Ende und dem Felgenrand liegt, der dem Felgensitz entspricht, der dem genannten Ende axial nächstgelegen ist.

3. Einstückige Felge (2) nach einem der Ansprüche 1 oder 2, dadurch gekennzeichnet, daß sie mindestens eine Montagenut (22) aufweist, die axial im Inneren mindestens den Sitz (23'') verlängert, der axial dem Felgenring (24) nächstgelegen ist.

4. Einstückige Felge (2) nach einem der Ansprüche 2 oder 3, dadurch gekennzeichnet, daß der Bereich (21) axial dem ersten Felgensitz (23') nächstgelegen ist.

5. Felge nach einem der Ansprüche 1 bis 4, dadurch gekennzeichnet, daß die Felgensitze (23', 23'') kegelstumpfförmige Erzeugende haben, die mit der Drehachse einen Winkel α' bilden, der zwischen 4° und 30° liegt.

6. Felge nach Anspruch 5, dadurch gekennzeichnet, daß die Felgensitze (23', 23'') kegelstumpfförmige Erzeugende aufweisen, die mit der Drehachse Winkel α' bilden, die untereinander ungleich sind.

7. Felge nach Anspruch 2 bis 6, dadurch gekennzeichnet, daß der Felgenbereich (21), auf den der Stützring (3) aufgezogen ist, eine zylindrische Erzeugende hat, deren Mindestdurchmesser D gleich ist dem Nenndurchmesser der Felge, wobei der genannte Bereich gegebenenfalls an seinem axial innenliegenden Rand mit einem Positionierungsvorsprung (26) versehen ist, der im Inneren als Anschlag für den Stützring (3) dient.

8. Baugruppe, die durch eine Felge (2) und einen Stützring (3) gebildet ist, dadurch gekennzeichnet, daß die Felge (2) der Baugruppe eine Felge nach einem der Ansprüche 2 bis 7 ist, und daß der Stützring (3) für die Lauffläche oval verformbar ist, bevorzugt in Umfangsrichtung undehnbar ist und auf den Bereich der Felge aufziehbar ist.

9. Baugruppe, die von einer Felge (2) und einem Reifen (1) sowie gegebenenfalls von einem Stützring (3) gebildet ist, dadurch gekennzeichnet, daß sie eine Felge (2) nach einem der Ansprüche 1 bis 8 sowie einen Reifen aufweist, der zwei Wülste (12', 12'') besitzt, wobei der Sitz des ersten Wulstes (12') eine Erzeugende (12B) aufweist, deren axial außenliegendes Ende sich auf einem Kreis mit einem Durchmesser befindet, der kleiner ist als der Durchmesser des Kreises, auf dem sich das axial innenliegende Ende befindet, daß dann der Sitz des zweiten Wulstes (12'') eine Erzeugende (12B) aufweist, deren axial außenliegendes Ende sich auf einem Kreis mit einem Durchmesser befindet, der mindestens gleich ist dem Durchmesser des Kreises, auf dem sich das axial vordere bzw. innere Ende befindet, sowie eine radiale Karkassenbewehrung (13), die in jedem Wulst (12', 12'') an einem Verstärkungsring (14) verankert ist, wobei die genannte Bewehrung (13), wenn der Reifen auf der Felge montiert ist und auf seinen Betriebsdruck aufgepumpt ist, und mindestens im ersten Wulst (12'), ein Meridianprofil mit einer konstanten Krümmungsrichtung aufweist, bei dem die Tangente AT an den Berührungspunkt (A) mit dem Verstärkungsring (14) des Wulstes (12') mit der Drehachse einen nach außen offenen Winkel φ von mindestens 70° und bevorzugt mehr als 80° bildet.

10. Reifen (1), der dazu bestimmt ist, auf einer Felge nach einem der Ansprüche 1 bis 9 montiert zu werden, dadurch gekennzeichnet, daß er zwei Wülste (12', 12'') besitzt, wobei der Sitz des ersten Wulstes (12') eine Erzeugende (12B) aufweist, deren axial außenliegendes Ende sich auf einem Kreis mit einem Durchmesser befindet, der kleiner ist als der Durchmesser des Kreises, auf dem sich das axial innenliegende Ende befindet, daß dann der Sitz des zweiten Wulstes (12'') eine Erzeugende (12B) aufweist, deren axial außenliegendes Ende sich auf einem Kreis mit einem Durchmesser befindet, der mindestens gleich ist dem Durchmesser des Kreises, auf dem sich das axial vordere bzw. innere Ende befindet, sowie eine radiale Karkassenbewehrung (13), die in jedem Wulst (12', 12'') an einem Verstärkungsring (14) verankert ist, wobei die genannte Bewehrung (12), wenn der Reifen auf der Felge montiert und auf seinen Betriebsdruck aufgepumpt ist, und mindestens im ersten Wulst (12'), ein Meridianprofil mit einer konstanten Krümmungsrichtung aufweist, bei dem die Tangente AT an den Berührungspunkt A mit dem Verstärkungsring (14) des Wulstes (12') mit der Drehachse einen nach außen offenen Winkel Φ von mindestens 70° und bevorzugt mehr als 80° bildet.

11. Reifen (1) nach Anspruch 10, dadurch gekennzeichnet, daß die genannte Bewehrung, wenn der Reifen auf der Felge montiert ist und auf seinen Betriebsdruck aufgepumpt ist, ein Meridianprofil hat, dessen Krümmungsrichtung über seine gesamte Länge konstant ist, und daß die Tangente AT an den Berührungspunkten A des genannten Profils mit Verstärkungsringen (14) der Wülste (12', 12'') mit der Drehachse Winkel Φ bilden, die zwischen 70° und 110° liegen.

12. Reifen (1) nach Anspruch 10, dadurch gekennzeichnet, daß die genannte Bewehrung (13), wenn der Reifen auf der Felge montiert ist und auf seinen Betriebsdruck aufgepumpt ist, ein Meridianprofil hat, das
- im ersten Wulst (12') eine konstante Krümmungsrichtung hat, wobei die Tangente AT an dem Berührungspunkt A mit dem Verstärkungsring (14) des ersten Wulstes (12') mit der Drehachse einen nach außen offenen Winkel Φ von mindestens 70° und bevorzugt mehr als 80° aufweist, und
- im zweiten Wulst (12'') einen Wendepunkt I darbietet, bei dem von einer konvexen Krümmung des genannten Profils auf eine konkave Krümmung desselben Profils übergegangen wird, wobei der genannte Abschnitt des Profils mit konvexer Krümmung eine Tangente IT' am Wendepunkt I aufweist, die mit der Drehachse einen axial und radial nach außen offenen Winkel Φ' bildet, der zwischen 60° und 90° liegt.
